# EUROPÄISCHE PATENTSCHRIFT

(11) **EP 1 749 719 B1**
(45) Veröffentlichungstag und Bekanntmachung des Hinweises auf die Patenterteilung: **02.03.2011**
(21) Anmeldenummer: 06117506.3
(22) Anmeldetag: 19.07.2006
(51) Int. Cl.: B60S 1/34

(54) **Wischerarm für eine Scheibenwischvorrichtung**
Wiper arm for a windscreen wiper device
Bras d'essuie-glace pour un dispositif d'essuie-glace

(30) Priorität: 01.08.2005 DE 102005036044; 05.09.2005 DE 102005041997
(43) Veröffentlichungstag der Anmeldung: 07.02.2007
(73) Patentinhaber: ROBERT BOSCH GMBH, 70442 Stuttgart (DE)
(72) Erfinder: Wilms, Christian, 3582 Koersel-Beringen (BE)

(56) Entgegenhaltungen:
- EP-A- 0 289 655
- EP-A- 0 639 487
- DE-U1- 8 630 990
- GB-A- 2 151 465
- US-A- 5 621 944

## Beschreibung

### Stand der Technik

Die Erfindung betrifft einen Wischerarm für eine Scheibenwischvorrichtung nach Gattung des unabhängigen Anspruchs.

Es sind schon zahlreiche Wischerarme für Scheibenwischvorrichtungen von Kraftfahrzeugen, beispielsweise aus der DE-A-103 315 69, bekannt, die im Betrieb in einer Ebene über eine Scheibe zu pendeln vermögen und mindestens ein Gelenkteil als erstes Teil umfassen, an dem eine Verlängerung als zweites Teil befestigt ist, die das Gelenkteil verlängert. Die Verlängerung weist an ihrem freien Ende, also dem Ende, das dem Gelenkteil abgewandt ist, ein Befestigungsmittel zum Befestigen eines Wischblatts auf.

Bei verschiedenen Betriebsbedingungen kann bei derartigen Wischerarmen ein Rattern auftreten, so dass der Wischerarm mit dem Wischblatt ruckartig über die Scheibe bewegt wird. Dieses Phänomen ist auch als Slip-Stick-Effekt bekannt.

Zur Verminderung dieses Effekts wurde in der DE-A-199 53 515 ein elektronisches Verfahren vorgeschlagen, welches diesem Slip-Stick-Effekt entgegen wirkt. Derartige elektronische Verfahren sind jedoch aufwendig und kostenintensiv.

Weiterhin ist aus der US-A-5,621,944 ein Wischerarm mit den Merkmalen des Oberbegriffs des Anspruchs 1 bekannt.

### Vorteile der Erfindung

Der erfindungsgemäße Wischerarm mit den Merkmalen des Hauptanspruchs hat den Vorteil, dass zwischen dem ersten Teil und dem zweiten Teil, eine schockabsorbierende Verbindung vorgesehen ist. Durch eine derartige Verbindung kann das Rattern, bei dem stark wechselnde Belastungen vorherrschen, wirksam verhindert werden, so dass immer ein optimales Wischbild erzielt wird. Somit ist durch die Erfindung eine einfache und kostengünstige Möglichkeit gezeigt, den Slip-Stick-Effekt auf der Scheibe zu verhindern.

Ein besonders gutes Dämpfungsverhalten wird erfindungsgemäß dadurch erzielt, dass das Gelenkteil als erstes Teil das zweite Teil klammerartig umschließt, so dass ein Offenbereich entsteht und die Verbindung in dem Offenbereich hineinragt. Insbesondere ist dies auch einfach und kostengünstig zu fertigen.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Verbindung eine Dämpfung zur Schockabsorption aufweist, die Schocks in der Ebene der Scheibe, in der sich der Wischerarm bewegt, absorbiert.

Als besonders einfach und wirkungsvoll hat sich eine Verbindung erwiesen, die das zweite Teil teilweise, insbesondere im Bereich des ersten Teils umschließt und vom ersten Teil umschlossen ist. Dies ist kostengünstig herzustellen und gewährleistet eine hohe Stabilität.

Weist die Verlängerung und/oder die Verbindung Stabilisierungsmittel zur Stabilisierung der Längserstreckung auf, so wird das Wischbild weiter verbessert und die Stabilität des Wischerarms erhöht.

Besonders einfach und kostengünstig ist das zweite Teil als Stange ausgebildet ist und die Verbindung als Kunststoffhülle ausgebildet ist, die auf ein Ende der Stange aufgezogen ist.

Ebenso kostengünstig ist es, wenn die Verbindung teilweise aus Kunststoff ausgebildet ist, da dies leicht im Spritzgussverfahren verarbeitet werden kann. Dies gilt besonders dann, wenn die Verbindung als elastische Kunststoffmatte ausgebildet ist oder wenn die Verbindung als elastisches, röhrenartiges Kunststoffteil ausgebildet ist.

### Zeichnungen

Ein Ausführungsbeispiel der Erfindung ist in den Zeichnungen dargestellt und in der nachfolgenden Beschreibung näher erläutert. Es zeigen:
Figur 1 einen erfindungsgemäßen Wischerarm in einer perspektivischen Darstellung, Figur 2 die Verbindung eines erfindungsgemäßen Wischerarms im Detail,
Figur 3 Gelenkteil, Verlängerung und Verbindung eines erfindungsgemäßen Wischerarms im Detail und
Figur 4 eine Verlängerung eines erfindungsgemäßen Wischerarms vor der Montage.

### Beschreibung des Ausführungsbeispiels

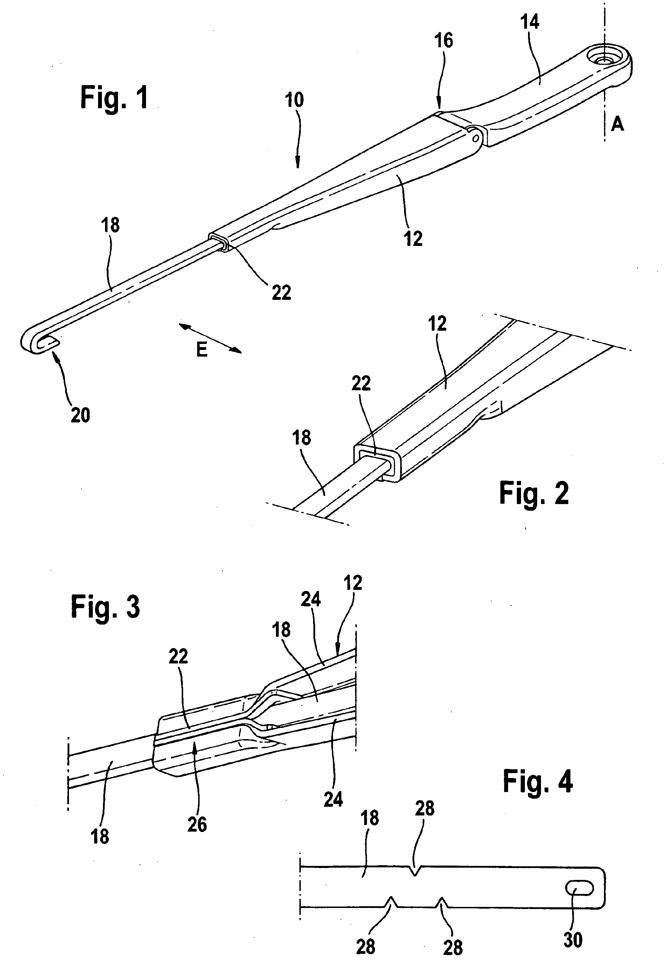

In Figur 1 ist ein erfindungsgemäßer Wischerarm 10 in einer perspektivischen Darstellung gezeigt. Im Betrieb pendelt der Wischerarm 10 um eine Achse A, so dass durch die pendelnde Bewegung eine Ebene E überstrichen wird. Diese Ebene E ist typischerweise im Wesentlichen parallel zur Scheibe des Kraftfahrzeugs.

Der Wischerarm 10 umfaßt im Wesentlichen ein Befestigungsteil 14, an dem ein Gelenkteil 12 als erstes Teil angelenkt ist. Das Befestigungsteil 14 dient dazu, den Wischerarm 10 an einer Wischerwelle der Scheibenwischvorrichtung zu befestigen. Das Gelenkteil 12 ist durch ein Scharnier 16 mit dem Befestigungsteil 14 verbunden. Das Gelenkteil 12 ist darüber hinaus an seinem freien Ende, welches dem Befestigungsteil 14 abgewandt ist, durch eine Verlängerung 18 als zweites Teil, die als Stange ausgebildet ist, verlängert. Am freien Ende der Verlängerung 18 ist ein Befestigungsmittel 20 angeordnet, welches zur Befestigung eines der Übersichtlichkeit halber nicht gezeichneten Wischblatts dient. Das Befestigungsmittel 20 ist damit an dem Ende der Verlängerung 18 angeordnet, das dem Gelenkteil 12 abgewandt ist. Das Gelenkteil 12 und das Befestigungsteil 14 sind hierbei als jeweils Blechbiegeteile ausgebildet. In einer Variation der Erfindung kann das Befestigungsteil 14 auch als Gußteil und/oder als Kunststoffteil ausgebildet sein.

Zwischen der als Stange ausgebildeten Verlängerung 18 und dem Gelenkteil 12 ist eine schockabsorbierende Verbindung 22 vorgesehen, die aus einem elastischen Kunststoff besteht. Das Gelenkteil 12 und das Befestigungsteil 14 sind hierbei als Blechteile ausgebildet, welche kastenförmig zu einem im Querschnitt umgekehrt u-förmigen Profil gebogen sind. Das Gelenkteil 12 ist an seinem dem Befestigungsteil 14 zugewandten Ende etwas breiter als das Befestigungsteil 14, so daß es dieses seitlich umschließt. An seinem freien, dem Befestigungsteil 12 abgewandten Ende, ist das Gelenkteil 14 verjüngt und umklammert die Stange 18 sowie die Verbindung 22.

In Figur 2 ist der Bereich der Verbindung 22 des erfindungsgemäßen Wischerarms 10 im Detail gezeigt. Die Verlängerung 18 ist von der Verbindung 22 an ihrem, dem Befestigungsmittel 20 abgewandten Ende, umschlossen. Um die Verbindung 22 wiederum schmiegt sich das freie Ende des Gelenkteils 12 und umschließt die Verbindung 22 fast vollständig.

In Figur 3 ist der Ausschnitt aus Figur 2 ebenfalls in perspektivischer Darstellung jedoch von unten, also von der Scheibe des Kraftfahrzeugs aus betrachtet, gezeigt. Das Gelenkteil 12 ist im Querschnitt von umgekehrt u-förmiger Gestalt, so dass eine Basis mit zwei Seitenwangen 24 gebildet ist. Im der Verlängerung 18 zugewandten Bereich des freien Endes des Gelenkteils 12 sind die Seitenwangen nach innen gebogen, so dass die Verbindung 22 und die Verlängerung 18 vom Gelenkteil 12 mit seinen Seitenwangen 24 umgriffen ist. Hierbei ist ein Offenbereich 26 zwischen beiden umgebogenen Seitenwangen 24 gebildet, durch den ein Teil der Verbindung 22 ragt. Idealerweise schließt die Verbindung 22 mit der Außenseite der nach innen gebogenen Seitenwangen 24 bündig ab. Auf diese Weise weist das Gelenkteil 12 mit der Verlängerung 18 keinen direkten Kontakt auf, da die Verbindung 22 zwischen dem Gelenkteil 12 und der Verlängerung 18 angeordnet ist, so dass Schwingungen und Schocks gedämpft werden. Ebenso können die Seitenwangen 24 Übermaß aufweisen und sich dadurch überlappen und/oder durch passende Strukturen klammerartig, form-, stoff- oder kraftschlüssig zusammenwirken.

In Figur 4 ist das Ende der Verlängerung 18 gezeigt, das dem Befestigungsmittel 20 abgewandt ist. Die Verlängerung 18 umfasst eine Stange, die etwa zwischen 0,5 und 1,5cm breit und zwischen 0,5 und 5mm dick ist. Die Stange 18 weist in dem Bereich, in dem die Verbindung 22 angeordnet ist, mehrere, insbesondere zwei bis vier vorzugsweise drei Kerben auf, die als Stabilisierungsmittel 28 dienen. Wird bei der Herstellung des Wischerarms 10 die Verbindung 22 um die Kerben 28 gelegt, so wird die Verbindung 22 beim Einklemmen bzw. Umlegen der Seitenwangen 24, die auch mit einem seitlichen Verpressen einhergehen kann, in die Kerben 28 hineingedrückt. Auf diese Weise ist gewährleistet, dass die Verlängerung 18 gegen ein Verschieben in Längsrichtung gesichert ist. In einer Variation können natürlich auch weitere Sicherungsmittel an der Verbindung 22 direkt ausgebildet sein, die beispielsweise auch mit den Kerben 28 der Verlängerung 18 zusammenwirken können. Ebenso ist es möglich, am Gelenkteil 12 und/oder an den Seitenwangen 24 des Gelenkteils 12 entsprechende Sicherungsmittel 28 vorzusehen, die ebenfalls mit Sicherungsmitteln 28 der Verlängerung 18 und/oder der Verbindung 22 zusammenwirken können. Hier können beispielsweise Noppen, Kerben oder umlaufende Erhebungen vorgesehen sein, die eine Stabilisierung in Längsrichtung der Verlängerung 18 bewirken.

An dem Ende der Verlängerung 18, die dem Gelenkteil 12 zugewandt ist, das sich also in montierter Position im Innenbereich des umgekehrt u-förmigen Gelenkteils 12 befmdet, ist noch eine Öffnung 30 vorgesehen, in die ein Zugmittel, beispielsweise eine Zugfeder, eingehakt werden kann.

In einer Variation der Erfindung kann die Verbindung 22 und die Verlängerung 18 auch einstückig ausgebildet sein, so dass sich eine schockabsorbierende Verlängerung derart ergibt, dass in der Ebene E auftretende Schocks zuverlässig gedämpft und damit absorbiert werden, ohne dass die Stabilität in Längsrichtung beeinträchtigt ist.

Die Verbindung 22 umfasst eine elastische Kunststoffmatte, welche bei der Montage des Wischerarms 10 in das Gelenkteil eingelegt wird. Anschließend wird die Verlängerung 18 eingelegt und die Seitenwangen 24 ins Innere des U-förmigen Profils verpresst. In einer Variation ist es natürlich auch möglich, die Verbindung als elastisches, röhrenartiges Kunststoffteil auszubilden. Dies kann in der Weise erfolgen, dass ein im Wesentlichen rechteckiges Kunststoffteil auf die Verlängerung 18 aufgeschoben wird und anschließend die Verlängerung 18 mit dem Kunststoffteil als Verbindung 22 in das Gelenkteil 12 eingelegt wird und die Seitenwangen 24 des Gelenkteils 12 umgebogen werden, so dass die Verlängerung 18 mit der Verbindung 22 sicher eingeklemmt ist. Grundsätzlich kann die Verbindung aber auch aus einem anderen schockabsorbierendem Material, beispielsweise einer geeigneten Keramik ausgebildet sein. Die Kraft, mit der die Seitenwangen 24 zum Verpressen der Verbindung 22 und der Stange 18 aufgewendet wird, wird hierbei grundsätzlich so berechnet, dass die Verlängerung 18 sich in ihrer Längsrichtung nicht bewegen kann, sondern lediglich eine Schockabsorption in der Ebene E, also der Pendelebene des Wischerarms 10 stattfindet.

In einer weiteren Variation kann auch das Befestigungsteil 14 zwei- oder mehrteilig ausgeführt sein und die schockabsorbierende Verbindung 22 dort angeordnet sein.

## Patentansprüche

1. Wischerarm (10) für eine Scheibenwischvorrichtung, insbesondere für ein Kraftfahrzeug, der im Betrieb in einer Ebene (E) über eine Scheibe zu pendeln vermag, mindestens umfassend ein Gelenkteil als erstes Teil (12), ein am ersten Teil (12) befestigtes, zweites Teil (18), als ein das erste Teil (12) verlängernde Verlängerung ausgebildet ist, das ein freies Ende mit einem Befestigungsmittel (20) zum Befestigen eines Wischblatts aufweist, wobei zwischen dem ersten Teil (12) und dem zweiten Teil (18) eine schockabsorbierende Verbindung (22) vorgesehen ist, **dadurch gekennzeichnet, daß** das Gelenkteil als erstes Teil (12) das zweite Teil (18) klammerartig umschließt, so daß ein Offenbereich (26) entsteht und die Verbindung (22) in den Offenbereich (26) hineinragt.

2. Wischerarm (10) nach Anspruch 1, **dadurch gekennzeichnet, daß** die Verbindung (22) eine Dämpfung zur Schockabsorbtion aufweist, die Schocks in der Ebene (E) absorbiert.

3. Wischerarm (10) nach einem der vorhergehenden Ansprüche, **dadurch gekennzeichnet; daß** die Verbindung (22) das zweite Teil (18) teilweise, insbesondere im Bereich des ersten Teils (12) umschließt und vom ersten Teil (12) umschlossen ist.

4. Wischerarm (10) nach einem der vorhergehenden Ansprüche, **dadurch gekennzeichnet, daß** das zweite Teil (18) und/oder die Verbindung (22) Stabilisierungsmittel (28) zur Stabilisierung der Längserstreckung aufweist.

5. Wischerarm (10) nach einem der vorhergehenden Ansprüche, **dadurch gekennzeichnet, daß** das zweite Teil (18) als verlängernde Stange ausgebildet ist und die Verbindung (22) eine Kunststoffhülle umfaßt die auf ein Ende der Stange (18) aufgezogen ist.

6. Wischerarm (10) nach einem der vorhergehenden Ansprüche, **dadurch gekennzeichnet, daß** die Verbindung (22) zumindest teilweise aus Kunststoff ausgebildet ist.

7. Wischerarm (10) nach einem der vorhergehenden Ansprüche, **dadurch gekennzeichnet, daß** die Verbindung (22) als elastische Kunststoffmatte ausgebildet ist.

8. Wischerarm (10) nach einem der vorhergehenden Ansprüche, **dadurch gekennzeichnet, daß** die Verbindung (22) als elastisches, röhrenartiges Kunststoffteil ausgebildet ist.

## Claims

1. Wiper arm (10) for a windscreen wiper device, in particular for a motor vehicle, which wiper arm is capable of moving during operation in pendulum fashion over a windscreen in a plane (E), the wiper arm at least comprising an articulated part as a first part (12), and a second part (18) which is fastened to the first part (12) and is designed in the form of an extension which extends the first part (12) and has a free end with a fastening means (20) for the fastening of a wiper blade, wherein a shock-absorbing connection (22) is provided between the first part (12) and the second part (18), **characterized in that** the articulated part as the first part (12) surrounds the second part (18) in the manner of a clip, thus producing an open region (26), and the connection (22) projects into the open region (26).

2. Wiper arm (10) according to Claim 1, **characterized in that** the connection (22) has a damping means for the shock absorption, the damping means absorbing shocks in the plane (E).

3. Wiper arm (10) according to one of the preceding claims, **characterized in that** the connection (22) partially surrounds the second part (18), in particular in the region of the first part (12), and is surrounded by the first part (12).

4. Wiper arm (10) according to one of the preceding claims, **characterized in that** the second part (18) and/or the connection (22) have/has stabilizing means (28) for stabilizing the longitudinal extension.

5. Wiper arm (10) according to one of the preceding claims, **characterized in that** the second part (18) is designed as an extending rod, and the connection (22) comprises a plastics covering which is pulled onto one end of the rod (18).

6. Wiper arm (10) according to one of the preceding claims, **characterized in that** the connection (22) is at least partially formed from plastic.

7. Wiper arm (10) according to one of the preceding claims, **characterized in that** the connection (22) is designed as a flexible plastics mat.

8. Wiper arm (10) according to one of the preceding claims, **characterized in that** the connection (22) is designed as an elastic, tubular plastics part.

## Revendications

1. Bras d'essuie-glace (10) pour un dispositif d'essuie-glace, en particulier pour un véhicule automobile, qui, pendant le fonctionnement, est en mesure d'osciller dans un plan (E) sur une vitre, comprenant au moins une partie articulée en tant que première partie (12), une deuxième partie (18) fixée sur la première partie (12) en tant que prolongement prolongeant la première partie (12), qui présente une extrémité libre avec un moyen de fixation (20) pour la fixation d'un balai d'essuie-glace, entre la première partie (12) et la deuxième partie (18) étant prévue une connexion absorbant les chocs (22), **caractérisé en ce que** la partie articulée entoure, en tant que première partie (12), la deuxième partie (18) en forme de pince, de sorte qu'une région ouverte (26) soit formée et que la connexion (22) pénètre dans la région ouverte (26).

2. Bras d'essuie-glace (10) selon la revendication 1, **caractérisé en ce que** la connexion (22) présente un amortissement pour l'absorption des chocs, qui absorbe les chocs dans le plan (E).

3. Bras d'essuie-glace (10) selon l'une quelconque des revendications précédentes, **caractérisé en ce que** la connexion (22) entoure la deuxième partie (18) en partie, notamment dans la région de la première partie (12), et est entourée par la première partie (12).

4. Bras d'essuie-glace (10) selon l'une quelconque des revendications précédentes, **caractérisé en ce que** la deuxième partie (18) et/ou la connexion (22) présente(nt) des moyens de stabilisation (28) pour stabiliser l'étendue longitudinale.

5. Bras d'essuie-glace (10) selon l'une quelconque des revendications précédentes, **caractérisé en ce que** la deuxième partie (18) est réalisée sous forme de tige de prolongation, et la connexion (22) comprend une douille en plastique qui est tirée par-dessus une extrémité de la tige (18).

6. Bras d'essuie-glace (10) selon l'une quelconque des revendications précédentes, **caractérisé en ce que** la connexion (22) est réalisée au moins en partie en plastique.

7. Bras d'essuie-glace (10) selon l'une quelconque des revendications précédentes, **caractérisé en ce que** la connexion (22) est réalisée sous forme de tapis élastique en plastique.

8. Bras d'essuie-glace (10) selon l'une quelconque des revendications précédentes, **caractérisé en ce que** la connexion (22) est réalisée sous forme de partie élastique en plastique de type tube.
